(19)

Europäisches
Patentamt
European
Patent Office
Office européen
des brevets

(11) **EP 4 102 414 A1**

(12) **EUROPEAN PATENT APPLICATION**

(43) Date of publication:
**14.12.2022  Bulletin 2022/50**

(21) Application number: **21178927.6**

(22) Date of filing: **11.06.2021**

(51) International Patent Classification (IPC):
**G06N 5/02** (2006.01)    **G06N 5/04** (2006.01)
**G06N 7/00** (2006.01)    **G06N 3/04** (2006.01)

(52) Cooperative Patent Classification (CPC):
**G06N 5/022; G06N 3/0427; G06N 5/045;
G06N 7/005**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Siemens Aktiengesellschaft
80333 München (DE)**

(72) Inventors:
• **Himmelhuber, Anna
  93142 Maxhütte-Haidhof (DE)**
• **Joblin, Mitchell
  81825 München (DE)**
• **Ringsquandl, Martin
  83022 Rosenheim (DE)**

(54)   **COMPUTER IMPLEMENTED METHOD FOR CONTROLLING A CLASSIFICATION MADE BY A
GRAPH NEURAL NETWORK, CONTROL UNIT AND COMPUTER PROGRAM PRODUCT**

(57)    The invention relates to a computer implemented method for controlling a classification (CL) made by a graph neural network (GNN) trained by using a plurality of knowledge graphs describing a complex system by nodes and edges, said classification relating to a specific knowledge graph (KG) and

said classification (CL) being associated with a classification probability (p(CL))

comprising the following steps:

a) Taking the specific knowledge graph (KG) which has been used as input for graph neural network (GNN) when the classification (CL) was made by GNN with the associated classification probability (p(CL);

b) Removing at least one node of the knowledge graph (KG) according to a policy which decides on which node is removed, said policy being trained that only nodes are removed which do not increase the classification probability (p(CL)) of the classification;

c) Iterating step b) until a reduced knowledge graph with a reduced number of nodes is obtained;

d) Providing, from the reduced knowledge graph, information relating to at least on one of:

i) Which at least one node contributes to the classification by considering the remaining nodes and edges in the reduced knowledge graph, said at least one node representing an aspect of the complex system;

ii) the size of this contribution.

FIG 2

EP 4 102 414 A1

**Description**

**Field of the Invention**

The invention relates to a computer implemented method for controlling a classification made by a graph neural network. The invention further relates to a corresponding control unit and a computer program product.

**Background**

Complex real-world data sets can be captured in the form of graphs or networks. Examples are social networks, knowledge graphs, protein-interaction networks, the World Wide Web and many more. Complex systems can be described as so called "knowledge graphs". Examples are building digital twins, factory monitoring or machine service operations. In the latter one, large industry machines, such as turbines, transformers or generators, which are valuable assets and are therefore kept in a maintenance program. Having all maintenance events, a model of the machines, information about location, usage and connected components in one knowledge graphs allows for better maintenance cycles in terms of prediction of an error or failure and error detection. This results in a higher availability of the industry machine and lower costs for its deployment.

Graph neural networks (GNNs) are connectionist models that can capture the dependence of these graphs via message passing between the nodes of graphs. Unlike standard neural networks, graph neural networks retain a state that can represent information from its neighborhood with arbitrary depth as well as incorporate node feature information.

However, similarly to other connectionist models, GNNs lack transparency in their decision-making. In the above example of the machine maintenance, e.g., why a certain spare part is predicted to need replacement. Since the unprecedented levels of performance of such AI methods lead to their increasingly dominant role, there is an emerging need to understand the decision-making process of such systems.

The growing concern regarding potential bias in these models creates a demand for model transparency and interpretability. Therefore, model explainability is a prerequisite for building trust and adoption of AI systems in high stakes domains requiring reliability and safety such as healthcare and critical industrial applications, e.g., with significant economic implications such as predictive maintenance.

It is one object of the invention to offer a possibility to control decisions taken by a graph neural network operating on knowledge graphs or networks.

**Brief Summary of the Invention**

This is solved by what is disclosed in the independent claims. Advantageous embodiments are subject of the dependent claims.

The invention relates to a computer implemented method for controlling a classification made by a graph neural network or GNN. This GNN was trained using a plurality of knowledge graphs, each describing a complex system by using nodes and edges connecting nodes.

For a specific knowledge graph a classification is made by the GNN, e.g. "component with high risk of failure" within the complex system described by the knowledge graph. This classification is associated with a certain classification probability.

For the controlling of this classification decision the specific knowledge graph and the trained GNN is taken. According to a policy, which is in particular obtained by reinforcement learning, a node is chosen, and it is decided whether this node is removed or not based in its contribution to the classification. This is iterated until a reduced knowledge graph with a reduced number of nodes is obtained, each of them having impact on the classification decision. The impact can be ensured in that according to the policy only nodes are removed which do not increase the probability of the classification decision.

From the reduced knowledge graph information can be provided which nodes and edges corresponding to aspects of a complex system contribute to a classification decision and about the size of the contribution.

By use of this information the correctness of a classification decision can be controlled and according to a preferred embodiment this information is used to adapt the underlying model of the knowledge graph, e.g., the model of the complex machine, or correcting the used data, e.g., if wrong data sets were used.

According to a preferred embodiment the policy is trained by reinforcement learning. For this, the trained GNN is used which has produced the classification with the associated classification when the specific knowledge graph was used as input data.

A variety of knowledge graphs is taken as possible inputs to the GNN.

In particular, this variety comprises a large number of knowledge graphs or/and the knowledge graphs cover all possible classifications for a specific classification task, e.g., the classification "high risk", "medium risk", "small risk" of the failure risk of a certain component.

The number of knowledge graphs which are used in the training depends on the objectives, e.g., on the accuracy to be achieved when classifying. Each of the knowledge graphs describes a complex system. The complex systems are similar in that the same type of system is described. E.g., industrial machines with a significant overlap of similar components are used or a similar function, e.g., providing engines for hybrid cars or providing the same tool.

Then one knowledge graph is taken and at least one node, i.e., one or more nodes, are chosen. According to the policy the chosen node is removed or kept.

According to a preferred embodiment, at the start of the iteration process in which the knowledge graph is reduced to a reduced knowledge graph, nodes are arbitrarily chosen according to the policy.

This has the advantage of eliminating a bias in the reduction process.

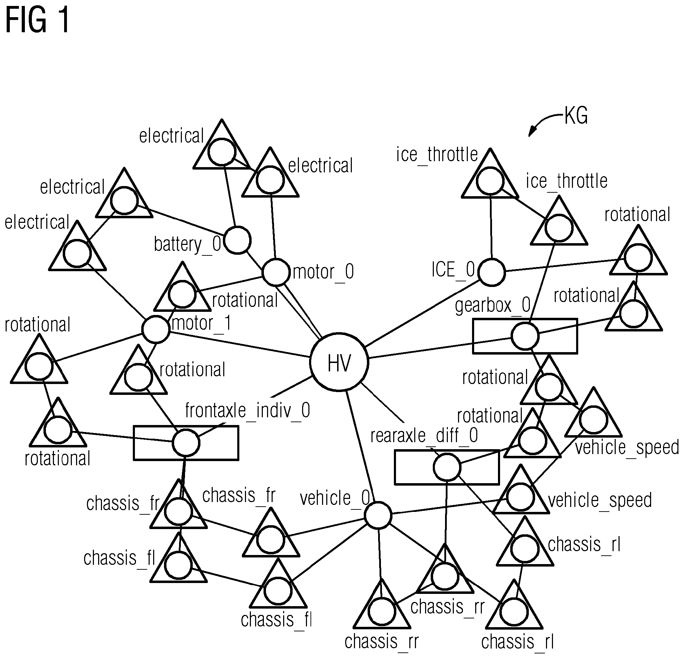

According to another preferred embodiment, at the beginning one or more specific nodes are chosen according to the policy. E.g., nodes representing properties that have no relation to the investigated classification can be removed first. Alternatively or additionally nodes distant from the central target node (see description of Fig.1) of the knowledge graph may be removed first, as they relate only indirectly to the target node, e.g., via several hops across other nodes.

This has the advantage that prior knowledge can be introduced and the reduction process can be accelerated.

If the node is not removed it is e.g., marked as not to be removed further, and another node is chosen.

If the node is removed, then the knowledge graph is updated and thus an intermediary reduced knowledge graph is obtained having at least one node less as well as the respective edges to that node.

This intermediary reduced knowledge graph is used as new input to the trained GNN and thus a new classification with a new classification probability is obtained.

Then an entropy of the classification probabilities of all possible classifications is determined. E.g., the classification probabilities change due to the removal and also the possible classifications might change, in particular that a classification is not possible anymore.

The determined entropy is considered when calculating a reward of the "node removal iteration step".

According to a preferred embodiment the reward is positive, e.g., an integer number, in particular 1, if the entropy is decreased. This decrease of entropy may describe that a classification is made with a higher classification probability or that less classification possibilities are available. According to another preferred embodiment the reward is negative, e.g., the negative of the integer number used for the positive reward, in particular -1, if the entropy increases, as this might represent a more equal distribution of the classification probabilities.

Depending on the reward, the policy is updated, in particular the node is labelled as advantageous to remove or to keep, and the steps of choosing a node, removing a node, computing a classification, determining an entropy and a reward, and updating the policy again are repeated until a reduction exit criterion is met, i.e., when a final reduced knowledge graph has been obtained. The updated policy is used for the next iteration step, i.e., when taking the next knowledge graph out of the variety of knowledge graphs.

According to a preferred embodiment the reduction exit criterion is met, when the intermediary reduced knowledge graph has only a specified minimum number of remaining nodes, e.g., 3 to 5. Alternatively or additionally, the entropy is not reduced further, in particular has been reduced during a specified iteration number of iteration cycles only insignificantly, e.g. in the sub-percentage regime of the classification probability. Further alternatively or additionally, it is met when a negative reward was obtained for specific number of times.

According to a preferred embodiment, the policy training exit criterion is met when all or a certain share, e.g., 50 %, of the knowledge graphs of the variety have been used as input. Alternatively or additionally, it is met when a finally reduced subgraph with a defined minimum number of remaining nodes is achieved after a certain number of reduction processes. After having met the policy exit criterion, a policy is available which can then be applied to a method for controlling a classification as described in claim 1.

According to an advantageous embodiment a final reward is calculated which is dependent on criteria such as size of subgraph, e.g., that only a small number of nodes is remaining, or size of the entropy. This final reward is then used to update the policy used for the training using the next knowledge graph out of the variety of knowledge graphs.

After the reduction exit criterium is met, another knowledge graph out of the variety of knowledge graphs and the reduction process is repeated.

This is repeated with other knowledge graphs out of the variety of knowledge graphs until a policy training exit criterion is met.

The invention further relates to a corresponding control unit for performing the computer implemented method and a computer program product.

The invention and its embodiments have the following advantages:

As said, through the increasing popularity and a need for explainability in AI, a variety of explainable models for neural networks are being developed. These include surrogate models which are interpretable models that are trained to approximate the predictions of a black box model. A global surrogate model is an interpretable model that is trained to approximate the predictions of a black box model. Conclusions can be drawn about the black box model by interpreting the surrogate model. While there is some explanatory value to these input-output methods, they fail to give insights into the inner workings of a neural network and cannot identify which type of information was influential on making a prediction and fails to consider relational information.

That consideration can be achieved by the invention in its various embodiments.

Further, the trained GNN and its prediction(s) are used for the invention in its various embodiments, and an explanation is returned in the form of a small subgraph of the input graph together with a small subset of node features that are most influential for the prediction. For their selection, the mutual information between the GNN prediction and the distribution of possible subgraph or reduced knowledge graph structures is maximized. This is more comprehensible than using e.g., mean field variational approximations, where the GNNs decision making process is interpreted by identifying a sparse receptive field containing influential elements.

**Brief description of the drawings:**

Further embodiments, features, and advantages of the present invention will become apparent from the subsequent description and dependent claims, taken in conjunction with the accompanying drawings of which show:

Fig. 1 an example of a graphical representation or knowledge graph of a data structure used for a subset of components of an electric vehicle, comprising various components;

Fig. 2 a schematic flow diagram of how the nodes of a knowledge graph are removed and a reduced knowledge graph or subgraph is obtained;

Fig.3 a schematic flow diagram showing the sequence of events for the replacement of a spare part of an industrial machine;

Fig.4 a reduced knowledge graph which shows the most influential nodes for a decision taken by the GNN;

Fig.5 an example of non-consistent data, the non-consistency being visible in the shown reduced subgraph;

Fig.6 a control unit for performing a method for controlling a classification made by a GNN.

The described invention in its various embodiments provides a possibility to explain a GNN prediction in form of a subgraph or reduced knowledge graph.

A GNN can be classified as an opaque, i.e., non-transparent system, where mechanisms mapping inputs to outputs are invisible to the user, also known as black-box' models.

As was said, through the increasing popularity and need for explainability in AI, a variety of explainable models for neural networks have been developed. These include surrogate models which are interpretable models that are trained to approximate the predictions of a black box model. Other approaches include the identification of the most relevant features.

These methods are not tailored to graph-structured data, which is problematic as the combination of nodes and edges between them can be decisive for predictions.

One graph-specific explanation method which is referred to as GNNExplainer is a model-agnostic approach that finds a subgraph of input data which influence GNNs predictions in the most significant way (published by Ying, Z., Bourgeois, D., You, J., Zitnik, M., Leskovec, J. as "Gnnexplainer: Generating explanations for graph neural networks" in: Advances in neural information processing systems. pp. 9244-9255 (2019)). Here, mean-field variational approximation is used to estimate the optimal subgraph that maximizes the mutual information with model's predictions. But this method comes with a simplifying assumption, as the mean-field approximation partitions the unknown variables and assumes each partition is independent, which can lead to biased results.

Another weakness is that one cannot integrate any prior knowledge about how a 'good' explanation looks like for different domains. Therefore, the generated explanations cannot be tailored to the user experience requirements.

Finally, the approach comes with a computational drawback, as an optimization loop needs to be run for each explanation.

The solution according to the present invention overcomes these drawbacks: it avoids the independence assumption, through removing nodes in a sequential manner. Additionally, reinforcement learning is capable of directly representing hard constraints and desired properties of the subgraph, i.e., to integrate domain knowledge through the design of environment dynamics and reward function. In terms of efficiency, it only needs to run the learned policy to generate an explanation.

**FIG** 1

With regard to Figure 1 an example of a knowledge graph is described. The knowledge graph again is an example of a network described by nodes and connections between the nodes.

Fig.1 depicts a schematic drawing of a section of a data architecture for a specific vehicle. This graphical representation of the data structure or network is denoted also as "knowledge graph" KG and it is centered around the target node HV denoting a hybrid vehicle.

The data structure is a formal representation of the engineering design which comprises heterogenous information about components, component properties and how and which of the components are related, thus is multi-relational. Thus, the shown data architecture can be derived from an engineering specification. This is what is usually provided by the customer for whom a specific design, e.g., of a hybrid car HV, is made. From this specification the nodes and their attributes, the type of the attribute and the edges, i.e., the connection between source and target node, can be extracted. Thus, a list of nodes representing the components with their type can be extracted. Therefrom, by using graph regressors an architecture can be derived which serves as input data for a graph neural network (GNN).

The architecture of a hybrid vehicle HV captured in a knowledge graph KG is only an example. Further examples of structures or networks which can be captured in knowledge graphs are molecules, production facilities, computer networks, a project planning process etc.

A GNN operates on this knowledge graph KG, i.e., the knowledge graph KG serves as input data to an input layer of the GNN which comprises one or more input neurons.

The input of the data is realized by using the adjacency matrix describing the connections between the nodes and feature matrices describing the features of individual nodes.

From there, input data is transmitted to one or more hidden layers each having a plurality of neurons. The result obtained by these hidden layers is forwarded to an output layer comprising one or more neurons, which provides the result externally. The neurons are connected, the strength of a connection is each expressed by a specific weight. The specific weight of the neurons is obtained in a training process.

In the training process training data are fed into the GNN whose weights are randomly initialized. The output of the GNN is compared with a desired result or set point and during the training, the weights are subsequently adjusted to achieve the desired result.

In the example of the project planning process the desired result can be a classification of the project as "high risk", "average risk" or "low risk" together with a probability of the respective classification.

In the example of the factory monitoring the classification can be that a certain component will fail together with the associated probability that this case "component XY failing" occurs.

The training data are a plurality of knowledge graphs KG describing similar systems. By this it is meant, that e.g., if a GNN is needed for providing classifications of components of a hybrid vehicle, then knowledge graphs for various hybrid vehicles are used, but not knowledge graphs e.g., for the factory monitoring process, because the underlying components and their relations are not comparable. However, data for hybrid vehicles which are different in view of e.g., components, e.g., different sizes of motor, or different relations, e.g., various coupling strength between chassis parts or different traction have to be regarded in order to avoid a specialization of the network.

**Fig.2**

As set out above, it is desired or event necessary to understand why the GNN has made a specific decision. Thus, a "wrong", i.e., undesired specialization, of the GNN can be corrected or e.g., wrong input data can be corrected.

Therefore, according to one aspect of the invention, the knowledge graph KG is simplified so that only the most significant nodes and the target node remain. This can range from the single remaining target node to the full subgraph.

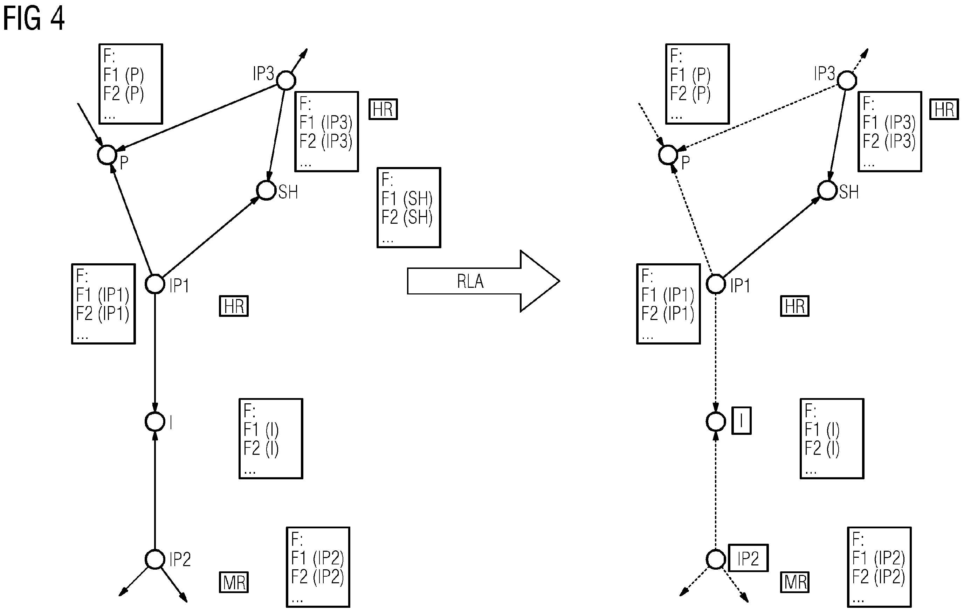

By target node the central node of a knowledge graph is denoted, e.g., in Fig. 1 the node "HV" denoting the hybrid vehicle as a whole or in Fig. 4 the node "IPx", x being 1,3, denoting the industry project as a whole.

A solution according to the invention is designed as a reinforcement learning agent (RL agent).

This RL agent is a piece of software that operates within well-defined limits, a subgraph reduction environment, i.e., the RL agent reduces the original knowledge graph to a subgraph where all the nodes with a limited influence on the decisions are successively, i.e., one after the other or alternatively group by group, removed.

By "environment" anything is meant, that the agent cannot change arbitrarily, e.g., the original knowledge graph with its nodes and edges. In the described embodiments the environment consists of the state space, i.e., available subgraphs, action space, i.e., available actions to remove one or more node, and reward design, i.e., which reward is applied for a specific action in a specific state. This will be explained in more detail below.

By "agent" a piece of software is described, that can act autonomously within a well-defined area, e.g., that in a certain state the agent can perform a restricted set of actions, e.g., the RL agent can remove nodes without receiving further, e.g., external instruction.

By "limited influence" it is meant that a node and its connections to other nodes contribute to the final classification only with a probability below a certain threshold. E.g., if a final subgraph contains only the target node, e.g., an industry process, and three further nodes with equal probabilities, then all nodes contributing below 33,3% probability to the final result have been eliminated.

According to an advantageous embodiment it is only considered whether the removal of a node increases the classification probability, leaves it unchanged or decreases the classification probability. In the last two cases the node is removed according to a learnt policy.

The RL agent predicts the action of node removal and is trained via policy gradient to optimize a reward composed of the relative size of the subgraph and its resulting entropy.

Constraints like the desired connectedness of the subgraph can be implemented, e.g., by labelling specific nodes or connections as to be kept in the graph at a specific status $s_i$.

The RL agent is mathematically described by a so called "Markov Decision Process". In a Markov process the transition probability from one state to another does not depend on previous transitions, but only on the actual state.

A "Markov Decision Process" is a model for decision processes where at each state $s_i$ the decision maker, e.g., the agent, can choose an action $a_i$, e.g., removing or not removing a node, within the set of actions $A=\{ai\}$ available at the specific state $s_i$.

For the Markov Decision Process according to the described embodiment, an iterative subgraph reduction process is formulated as a general decision process:

$$M= (S,A,R,p,\gamma) \quad (1)$$

Applying this formula on the problem of explaining a GNN decision, $S=\{si\}$ is the set of states that consists of all possible reduced subgraphs, i.e., the complete knowledge graph until a subgraph having only target node, e.g., "HV", and one (or any other minimum number of) further node(s).

Further, $A=\{a_i\}$ is the set of available actions for removing nodes. Thus, $a_i$ may describe the removal of the specific node XY or the removal of a specific group of nodes. Every of these actions $a_i$ lead to a specific state $s_{i+1}$, i.e., a subgraph where specific nodes have been removed. Again, in a specific state $s_i$ only a set of actions $a_i$ is available. E.g, for a state without a node "10" an action that node "10" is removed is not possible.

In the formula, $R(s_i)$ is a reward function that calculates the reward according to the generated states i. The reward $R(s_i)$ is a numerical value that the agent receives, when it performs a certain action $a_i$ at a certain state $s_i$.

The reward is determined by using the reduced subgraph as input data for the trained GNN and considering the possible classifications and their probabilities. This will be explained in more detail below.

It is the objective of the agent to maximise the overall reward, i.e., the reward summed up after having reached a finally reduced subgraph.

p defines the environment dynamics of the process, e.g., it provides constraints on the possible set of actions in a specific state.

$\gamma$ is between 0 and 1 and denoted as "discount factor" which prevents that the reward reaches infinite, hence is used to enforce that new strategies are tested, and that the agent does not simply keep one successful strategy.

The process to reduce the subgraph sequentially can then be described by a trajectory $(s_0, a_0, r_0,...,s_n, a_n, r_n)$, where $s_n$ is the final generated subgraph. The reduction of the subgraph at each time step t can be viewed as a state transition distribution, which can be described by:

$$p(s_{t+1}|s_t,...,s_0) = p(a_t|s_t,...s_0)p(s_{t+1}|s_t,...s_0,a_t), \quad (2)$$

where $p(a_t|s_t,...s_0)$ = probability for action $a_t$ is represented as a policy network $\pi\theta$. It provides a strategy which action should be taken at step t, i.e., which node should be removed.

Hence, a policy describes the strategy employed by the agent to determine the next action based on the current state $s_t$. It is defined as the probability distribution of actions for a given a state and the objective of an RL agent is to maximize the "expected" reward when following a policy $\pi\theta$.

As said, the RL agent reduces the initial subgraph step by step through node removal actions or ins other words it reduces the environments which consists of the state space, action space and reward design.

"State Space": The starting state s0 is the k-hop subgraph of the target node, i.e., a knowledge graph with a radius of k hops or in other words a maximum distance of k hops from the target node to the node which is located farthest.

The parameter "k" is determined by the number of layers of the GNN, whose decision we want to explain with the RL agent. The subsequent state s1 equals the s0 minus the removed node through action a0 unless this action was rejected through a constraint defined by the environment dynamics p.

In case the action $a_i$ was rejected, $a_{i+1}$ equals $a_i$. The final state $s_n$ is determined by the policy network and can range from the single remaining target node to the full subgraph.

"Action Space": Based on the initial k-hop subgraph, a set of nodes is defined that can be removed. The state usually contains all occurring nodes except the target node we want to explain. Each action $a_i$ corresponds to removing one node. After the action has been carried out, the action space and the subgraph are reduced by the node chosen for removal.

If the action has been rejected, the state space stays unchanged while the action space is reduced by the action that has been rejected.

"Reward Design": In the RL agent's environment only final rewards to guide the behaviour of the reinforcement learning agent are considered, i.e., the reward which calculated based on the probability distribution after having used the reduced subgraph as input data to the trained GNN.

The reward is calculated based on the certainty of the classification decision taken by the GNN, which comes together with the classification decision as output of the GNN, which is done in the final state of the reduced subgraph, i.e., when the maximum of nodes is removed. This certainty is also denoted as "classification probability".

To determine the certainty with which a classification decision has been made by the GNN, we consider the entropy H which relates to the possible classifications and classification probabilities, see below.

Calculating the information for a random variable is the same as calculating the information for the probability distribution of the events for the random variable. The entropy function gives us the information for a random variable. Entropy is the negative of the sum over all states n of the probability $p_i$ of each event multiplied by the log of the probability $p_i$ of each event:

$$H(X) = - \sum_{i=1}^{n} p_i \, log_2 \; p_i \qquad (3)$$

The lowest entropy is calculated for a random variable that has a single event, e.g., one possible classification, with a probability of 1.0, a certainty. The largest entropy for a random variable will be if all events are equally likely.

Removing a node from the final subgraph which is used for the explanation of the classification therefore shouldn't increase the entropy of the target node classification probability distribution but either decrease or not influence it. This gives us a more interpretable subgraph without any information loss.

Here, the change in entropy is rewarded or penalized, depending on its increase or decrease. Additionally, the normalized graph reduction is positively rewarded, since we want a small subgraph to explain the classification decision.

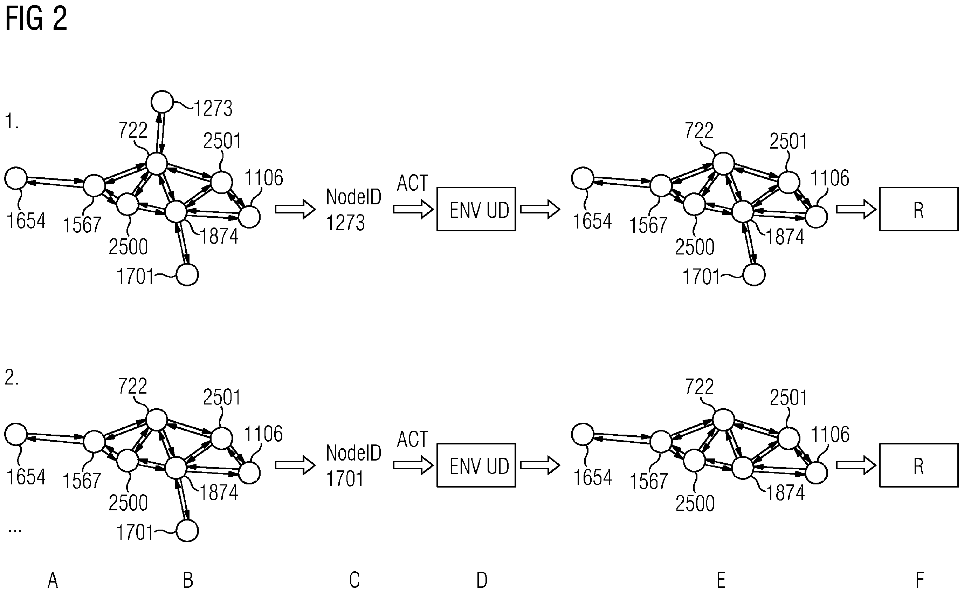

The training which results in a policy which can be applied then by the RL agent whose training is schematically shown in Fig.2

In step A the initial state of a knowledge graph KG, e.g., a k-hop subgraph, is depicted. The knowledge graph KG has a plurality of nodes which are at least partly connected by edges.

In step B a node is removed according to a policy $\Pi_\theta$. In the beginning, this removing is arbitrarily or according to fixed rules, in the course of the training the policy considers the effects on the entropy H, see step F.

Then a specific node is chosen in step C, in the example depicted in line 1. the node with the Node ID 1273, and an action ACT for removing said node is envisaged.

Consequently, in step D, the environment is updated ENV UD, i.e., the node is either removed or the action is rejected, and the node is kept and labelled depending on the constraints by the environment dynamics, which are described by parameter p, see above.

If the action ACT took place, then in step E a new state "t+1" is entered and the subgraph is reduced by one node.

This reduced subgraph is used as input data to the GNN which was used for the classification decision which is to be explained. Based on the new input a new classification decision with an associated probability together with other classification possibilities and their associated probabilities is obtained by the GNN.

According to an example of projects with a certain risk, for the original graph there were three classification classes, namely high risk, medium risk and low risk. Each of them had an associated probability with which the classification was achieved, e.g., 0.3, 0.45 and 0.25, hence the project described by the original subgraph was classified as medium risk. When using the reduced subgraph as input data, the classification classes remained but the probabilities changed to 0.25, 0.55, 0.20.

According to another example, if there are two classification decisions, e.g., "component critical" with the probability $p_1$ r "component uncritical" with the probability $p_2$, then the entropy can be calculated using formula 3.

Based on the classification classes and their probabilities the entropy can be calculated using formula 3. The entropy can remain the same, increase or decrease for a new reduced subgraph, i.e., a subgraph with a further removed node. Depending on the entropy, in step F a reward R is calculated. In the described embodiment, it is desired, that the probability for the classification decision is increased or at least remains the same, which results in a decreased or same size of the entropy. In these cases, a positive reward is calculated. If the entropy increases or/and the probability for the taken classification decision decreases, then a negative reward is taken.

According to an advantageous embodiment the positive reward is always 1 and the negative reward is always -1.

Optionally a reward of 0 is provided if the entropy remains the same.

According to another embodiment various positive and negative values of the reward can be calculated depending on the changes of the entropy.

The process of reducing the knowledge graph KG is repeated in that a further node is removed, the subgraph is updated and used as input for the trained GNN and the reward R is calculated. This is shown using the example of the node with the node ID 1701 in line 2, and is to be repeated several times, as indicated by the dots at the end of line 2 until a finally reduced subgraph is obtained.

According to further advantageous embodiments for the calculation of the final reward the size of the final reduced subgraph is considered or details which are dependent on the use case, e.g., that certain nodes or combinations thereof should be kept.

By final reward the reward is denoted after the reduction exit criterion is met.

In particular the policy is updated considering also this final reward and this updated policy is then used in the iteration with the next knowledge graph out of the variety of knowledge graphs.

This sequence of removing nodes in the graph used as input data according to a policy which is being learnt in the training, computing by the GNN a classification with the assigned classification probability, calculating a reward based on the entropy and updating the policy is iterated until the entropy does not decrease further.

This means that any further removal of nodes would also remove information on basis of which the classification decision was taken.

**Fig.3**

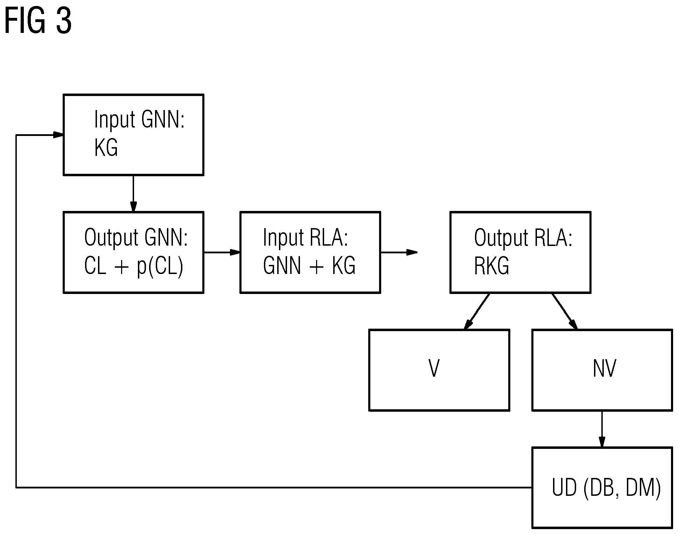

With reference to Fig. 3 a sequence of events or workflow is depicted to validate the replacement of parts predictions Large industry machines, such as turbines, transformers or generators, are valuable assets and therefore kept in maintenance programs, i.e., programs to keep the machine in the desired state. All events during operation of the machines and maintenance are documented in high detail. Having information on all the maintenance events, a model describing the respective machine, information about location, usage and connected components in one knowledge graphs allows for better maintenance cycles in terms of prediction, e.g., prediction of failure of a specific component, and error detection, e.g., by knowing where a failure is likely to occur these "area can be supervised more closely. This yields a higher availability and lower costs associated with the machine.

One scenario in which GNNs are used in the maintenance process, is determining which spare parts should be used to replace outdated ones, i.e., through link prediction, i.e., predicting an edge between two nodes.

The GNN suggested a spare part and it is desired to explain what evidence the GNN model used to decide. By using a RL agent to produce the reduced subgraphs, it can be ensured that the GNN considered information deemed important and relevant when making the prediction and did not rely on a meaningless correlation or utilize errors present in the underlying knowledge presented to the learning algorithm.

An example for a meaningless correlation can be to use the serial number of the spare part for a decision, unless this would really provide information on successor of the outdated parts, which is often not the case.

As input to the GNN a knowledge graph KG is used. The GNN produces as output a classification CL with the associated classification probability p(CL), e.g., the envisaged spare part with its associated classification probability. This output together with the knowledge graph KG is provided as input to the trained RL agent RLA, which then produces a reduced subgraph or reduced knowledge graph RKG. Based on this subgraph the contributions of individual nodes which represent aspects of the large industry machine, e.g. specific component groups or operating regime of the industry machine, to the made classification, i.e. replacement recommendation, can be seen.

Based on this, a decision can be taken whether the classification is valid V or not valid NV, e.g., by comparing the used correlations with a list of meaningful correlations or with a control data base containing the information of the knowledge graph.

If a not meaningful correlation or an inconsistency with a control data base is found, an update UD of the data model DM captured in the knowledge graph KG or an update of the data base DB, e.g., with not sufficient data integrity, used for the knowledge graph is performed.

In this way, a malfunction of the machine can be avoided by using an appropriate spare part instead of the erroneous proposal by the GNN.

**Fig. 4**

With regard to Fig. 4 the result of the process schematically depicted in Fig.2, i.e., nodes are being removed sequentially from the original subgraph to arrive at a smaller "explanation subgraph", is shown for the example of an evaluation of an industry project.

Industry projects need careful planning and constant monitoring of all potential risks. On the financial side, the relations between all stakeholders, investors and partners, as well as their investments and information about them, such as official legal location, currencies and similar parameters are integrated in one knowledge graph.

As part of the data curation process, i.e., the integrating and organizing of the data which may stem from various sources, the RL agent RLA can be used to detect potential problems or issues due to misleading correlations and inconsistent data.

The finally reduced knowledge graph with only a small number of relevant nodes allows to discover risks unable to be seen before when using a GNN to classify industry projects according to their risk groups.

As said before the use of GNN for any classification problem presents a black box method. Further information on whether why a specific project has been classified in a certain risk class may therefore be required, i.e., why a GNN predicts a project as low-, high- or medium-risk.

In the example shown in Fig.4, it is known that the prediction of the node "Industry Project 1" IP1 as high-risk HR was erroneous or in other words, that the prediction made by a GNN using a knowledge graph centered around the target node "Industry Project 1 IP1 was wrong. Each node in Fig. 4 is assigned a list of features F, which are denoted as Fx (node), where x=1,2,...

On the left side the original knowledge graph is depicted. The highrisk HR classified target node "Industry Project 1" IP1 has a link or edge to the node I denoting the investors with features F such as Location, Currency, Legal System. Node I again has a link to another node IP2 denoting a second industry project IP2 classified as medium risk MR. Node IP1 has a further link to a node P describing partners with features Fi(P) such as size, affiliation etc. Node IP1 has another link to the node SH describing stakeholders, which again are characterized by a list of features Fi(SH).

The features in this example can be formed by affiliation, size, relevant currency or legal system of a partner, stake holder or investors; KPI (key performance indicator), cost or location of a project.

In examples relating to the industry machines the nodes denote individual component or component groups or functional groups and features are given by function, size, cost, lifetime, material or other aspects relevant for the function inside the machine, the associated costs and risk of failure or component availability.

The trained RL agent RLA is now used to show what was used for that prediction.

On the right side, the reduced subgraph which results from the application of the trained RL agent RLA is depicted by the solid black edges, whereas the links to removed nodes are denoted by dotted lines. The reduced subgraph shows that the target node IP1 is classified as high-risk HR because of the link to the same Stakeholder SH linked to another high-risk project Industry Project 3' IP3.

Comparison with the control data base revealed, that this link turned out to be an error in the database underlying the input knowledge graph. E.g., the two industry projects are erroneously connected to the same stakeholders.

In this way the trained RL agent RLA can be utilized to detect data issues. Advantageously it is therefore used as part of the data curation process where data from different sources are integrated and validated.

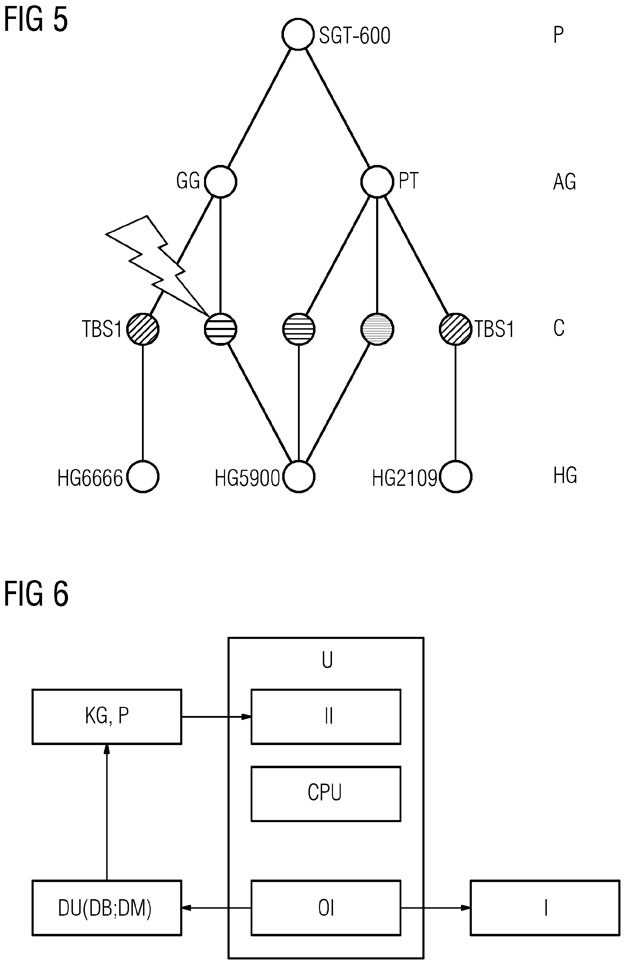

In **Fig.5** an example for non-consistent data is shown, which incorrectness can be detected by using a reduced subgraph. This reduced subgraph shows a parts list or bill of materials BOM. As it is already a reduced subgraph, it shows the relation which components are used in combination. Thus, an error in the data model can be easily detected.

The package P or root is described by the target or root node SGT-600, a gas turbine. This gas turbine can comprise different assembly groups AG, namely one for a gas generator GG or power turbine PT.

Depending on the assembly group AG there are restrictions on the use of components C, e.g., a turbine blade stage 1 TBS1 component, depicted by a circle filled with diagonal stripes, should not be connected to a gas generator GG. This erroneous relation is marked with a lightning and has to be cured in the data model used for producing the knowledge graph KG.

The connection between the turbine blade stage 1 TBS1 component and the power turbine PT is correct and therefore kept.

There are further relations between other components depicted groups. Each component C is assigned to a head group HG which allows an identification and also a grouping of components, e.g., those having a similar function. In the shown subgraph, the turbine blade stage 1 TBS1 component was assigned to a wrong head group HG6666. Correctly, it should have been assigned only to the headgroup HG2109. By the reduction this error can be easily detected.

In Fig. 6 a corresponding control unit U is depicted which has an input interface II for receiving a knowledge graph KG or /and a policy P. Further, the control unit U comprises a computing unit CPU for performing the method to control the classification or/and performing the training of the policy P. Via an output interface OI information can be provided which aspects contribute to the classification made by the GNN or/and the size of the contribution.

The interfaces may be internal in the control unit U or external to further devices, e.g., within a computer system.

In the foregoing description, various aspects of the present invention have been described. However, it will be understood by those skilled in the art that the present invention may be practiced with only some or all aspects of the present invention. For purposes of explanation, specific configurations are set forth in order to provide a thorough understanding of the present invention.

However, it will also be apparent to those skilled in the art that the present invention may be practiced without these specific details.

Parts of the description will be presented in terms of operations performed by a computer system, using terms such as data, state, link, fault, packet, and the like, consistent with the manner commonly employed by those skilled in the art to convey the substance of their work to others skilled in the art. As is well understood by those skilled in the art, these quantities take the form of electrical, magnetic, or optical signals capable of being stored, transferred, combined, and otherwise manipulated through mechanical and electrical components of the computer system; and the term computer system includes general purpose as well as special purpose data processing machines, routers, bridges, switches, and the like, that are standalone, adjunct or embedded.

Additionally, various operations will be described as multiple discrete steps in turn in a manner that is helpful to understand the present invention. However, the order of description should not be construed as to imply that these operations are necessarily order dependent, in particular, the order of their presentation.

Reference in the specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment.

**Claims**

1. Computer implemented method for controlling a classification (CL) made by a graph neural network (GNN) trained by using a plurality of knowledge graphs describing a complex system by nodes and edges, said classification relating to a specific knowledge graph (KG) and said classification (CL) being associated with a classification probability (p(CL)) comprising the following steps:

   a) Taking the specific knowledge graph (KG) which has been used as input for graph neural network (GNN) when the classification (CL) was made by GNN with the associated classification probability (p(CL));
   b) Removing at least one node of the knowledge graph (KG) according to a policy which decides on which node is removed, said policy being trained that only nodes are removed which do not increase the classification probability (p(CL)) of the classification;
   c) Iterating step b) until a reduced knowledge graph with a reduced number of nodes is obtained;
   d) Providing, from the reduced knowledge graph, information relating to at least on one of:

      i) Which at least one node contributes to the classification by considering the remaining nodes and edges in the reduced knowledge graph, said at least one node representing an aspect of the complex system;
      ii) the size of this contribution.

2. Method according to claim 1, wherein the policy in step b) is obtained by performing a reinforcement learning using the trained graph neural network (GNN) which provided the classification (CL) with the associated classification probability (p(CL)) when the specific knowledge graph (KG) was used as input data, comprising the following steps:

   b1) Taking a knowledge graph (KG) out of a variety of knowledge graphs;
   b2) Choosing at least one node of the knowledge graph (KG) according to a current policy for removing or keeping the at least one node;
   b3) Updating the knowledge graph (KG) in the case the node was removed and thus obtaining an intermediary reduced knowledge graph with a reduced number of nodes;
   b4) Using the intermediary reduced knowledge graph as input for the trained graph neural network (GNN) for obtaining a decision comprising a further classification with an associated further classification probability;
   b5) Applying a reward to the decision, which is calculated depending on the entropy of all associated classification probabilities of all possible classifications which can be obtained by the trained graph neural network (GNN) using the intermediary reduced knowledge graph as input;
   b6) Updating the current policy depending on the reward;
   b7) Iterating steps b2 to b6 on the accordingly reduced knowledge graph until a reduction exit criterion is met;
   b8) Iterating steps b1) through b7) whereby in step b1) another knowledge graph is taken out of the plurality of knowledge graphs and an updated policy is applied until a policy training exit criterion is met and thus the policy is obtained.

3. Method according to claims 1 or 2, wherein as a starting value of the policy an arbitrary removal of one or more nodes is provided.

4. Method according to claims 1 or 2 wherein as a starting value of the policy a removal of one or more nodes which are specified by one of

   - Distance to a target node of the knowledge graph;
   - A relationship to the classification;
   - A combination thereof

   is provided.

5. Method according to any of the previous claims 2 to 4, wherein the reward is positive if in step b5) the entropy of all associated classification probabilities of all possible classifications which can be obtained by the trained graph neural network using the intermediary reduced knowledge graph as input decreases.

6. Method according to any of the previous claims 2 to 5, wherein the reward is negative if in step b5) the entropy of all associated classification probabilities of all possible classifications which can be obtained by the trained graph neural network using the intermediary reduced knowledge graph as input increases.

7. Method according to any of the previous claims 5 to 6, wherein as positive reward an integer number is taken and as negative reward the negative of that integer number is taken.

8. Method according to any of the previous claims 2 to 7, wherein for a positive reward the policy is updated in that for the current reduced knowledge graph the node is qualified as removable node and for a negative reward the node is qualified as node not to be removed.

9. Method according to any of the previous claims 2 to 8, wherein the reduction exit criterium is specified by at least one of the following:

   - A specified number of the remaining nodes of the knowledge graph have been removed and this removal lead each consecutively to a negative reward;
   - Only a specified minimum number of nodes remains in the knowledge graph;
   - The entropy is reduced for a specified iteration number of times only insignificantly or is not decreasing at all.

10. Method according to any of the previous claims 2 to 9, wherein a final reward is assigned when the reduction exit criterion is met which is dependent on whether at least one of the following conditions is fulfilled:

    - A certain size of the knowledge graph is achieved which is in particular defined by a specified low number of nodes is remaining in the reduced knowledge graph;
    - At least one preferred node is remaining in the knowledge graph;
    - A certain amount of the entropy has been calculated.

11. Method according to any of the previous claims 2 to 10, wherein the policy training exit criterion is specified by at least one of the following:

    - By the policy a knowledge graph having only a specified minimum number of nodes is achieved after a preset amount of choosing steps according to b1);
    - A specified share of the knowledge graphs of the
    - variety was used in the training.

12. Method according to any of the previous claims wherein based on the information provided in step d) the underlying data model of the knowledge graph or/and the data used in the data model is adapted.

13. Computer implemented method for making a classification decision by a graph neural network operating on knowledge graphs comprising a method for controlling according to any of the claims 1 to 12, which is performed after the classification decision by the graph neural network is obtained.

14. Control Unit (U), for performing a method according to claim 1 or 13 using a policy trained according to any of the claims 2 to 12 comprising:

- An input interface (II) for receiving a knowledge graph (KG) or /and a policy (P)
- An output interface (OI) for providing at least one of

  • an information (I) according to step d)
  • an update to the data used in the knowledge graph
  • an update to the data model used for the knowledge graph

- A computing unit (CPU) for at least one of

  • performing the method according to claims 1 or 13
  • training of a policy according to any of the claims 2 to 12.

15. A non-transitory computer program product storing program elements to induce a computing unit (CPU), in particular that of a control unit (U) according to claim 14, to perform the method according to any of the claims 1 to 13.

## FIG 1

# FIG 2

EP 4 102 414 A1

## FIG 3

# FIG 4

F:
F1 (P)
F2 (P)
...

IP3

F:
F1 (IP3)
F2 (IP3)
...

HR

P

SH

F:
F1 (SH)
F2 (SH)
...

RLA

F:
F1 (IP1)
F2 (IP1)
...

IP1

HR

I

F:
F1 (I)
F2 (I)
...

IP2

F:
F1 (IP2)
F2 (IP2)
...

MR

F:
F1 (P)
F2 (P)
...

IP3

F:
F1 (IP3)
F2 (IP3)
...

HR

P

SH

F:
F1 (IP1)
F2 (IP1)
...

IP1

HR

I

F:
F1 (I)
F2 (I)
...

IP2

MR

F:
F1 (IP2)
F2 (IP2)
...

EP 4 102 414 A1

# FIG 5

# FIG 6

Europäisches
Patentamt

European
Patent Office

Office européen
des brevets

# EUROPEAN SEARCH REPORT

Application Number

EP 21 17 8927

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | HAO YUAN ET AL: "On Explainability of Graph Neural Networks via Subgraph Explorations", ARXIV.ORG, CORNELL UNIVERSITY LIBRARY, 201 OLIN LIBRARY CORNELL UNIVERSITY ITHACA, NY 14853, 9 February 2021 (2021-02-09), XP081877918, * abstract; figure 1 * * paragraphs [0003], [0A.3] * | 1-15 | INV. G06N5/02 G06N5/04 G06N7/00 G06N3/04 |
| A | HAO YUAN ET AL: "Explainability in Graph Neural Networks: A Taxonomic Survey", ARXIV.ORG, CORNELL UNIVERSITY LIBRARY, 201 OLIN LIBRARY CORNELL UNIVERSITY ITHACA, NY 14853, 31 December 2020 (2020-12-31), XP081849357, * abstract; figures 2, 3 * * paragraphs [0003] – [0006] * | 1-15 | |
| A | CHRIS LIN ET AL: "Graph Neural Networks Including Sparse Interpretability", ARXIV.ORG, CORNELL UNIVERSITY LIBRARY, 201 OLIN LIBRARY CORNELL UNIVERSITY ITHACA, NY 14853, 30 June 2020 (2020-06-30), XP081701311, * the whole document * | 1-15 | TECHNICAL FIELDS SEARCHED (IPC) G06N |
| A | REX YING ET AL: "GNNExplainer: Generating Explanations for Graph Neural Networks", ARXIV.ORG, CORNELL UNIVERSITY LIBRARY, 201 OLIN LIBRARY CORNELL UNIVERSITY ITHACA, NY 14853, 10 March 2019 (2019-03-10), XP081492072, * the whole document * | 1-15 | |

The present search report has been drawn up for all claims

| Place of search | Date of completion of the search | Examiner |
|---|---|---|
| Munich | 7 December 2021 | Cakiroglu Garton, S |

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **YING, Z ; BOURGEOIS, D. ; YOU, J. ; ZITNIK, M. ; LESKOVEC, J.** Gnnexplainer: Generating explanations for graph neural networks. *Advances in neural information processing systems,* 2019, 9244-9255